# EUROPEAN PATENT SPECIFICATION

(11) **EP 0 333 106 B1**
(45) Date of publication and mention of the grant of the patent: **04.08.1993**
(21) Application number: 89104432.3
(22) Date of filing: 13.03.1989
(51) Int. Cl.: G03G 15/00, G03G 15/20

(54) **Image forming apparatus**
Bilderzeugungsgerät
Appareil de formation d'images

(30) Priority: 14.03.1988 JP 60146/88
(43) Date of publication of application: 20.09.1989
(73) Proprietor: FUJITSU LIMITED, Kawasaki-shi, Kanagawa 211 (JP)
(72) Inventor: Watarai, Shinichi c/o Fujitsu Limited, Kawasaki-shi Kanagawa 211 (JP); Inoue, Makoto c/o Fujitsu Limited, Kawasaki-shi Kanagawa 211 (JP); Ohyabu, Keiji c/o Fujitsu Limited, Kawasaki-shi Kanagawa 211 (JP)
(74) Representative: Sunderland, James Harry

(56) References cited:
- DE-A- 3 536 588
- DE-A- 3 741 950
- GB-A- 2 009 041
- US-A- 4 428 660
- PATENT ABSTRACTS OF JAPAN, vol. 12, no. 194 (P-713)(3041), 7 June 1988; & JP-A-62 299982
- PATENT ABSTRACTS OF JAPAN, vol. 10, no. 264 (P-495)((2320), 9 September 1986; & JP-A-61 90182

## Description

This invention relates to an image forming apparatus, for instance as used in electrophotographic printing or copying machines, employing toner to form a toner image on a sheet of paper.

In electrophotographic recording apparatus a toner image, corresponding to an image to be recorded, is developed on a rotating photosensitive drum. A sheet of paper is fed in front of the developed toner image so that the toner image is transcribed onto the sheet, with sheet feed speed brought into conformity with the speed of the rotating drum surface. Next, the sheet with the toner image thereon is fed into two parallel rotating rollers of a fixing unit. One of the rollers is generally a heat roller and the other is a back-up roller. The two rollers are pressed transversely one towards the other, so that the toner is melted and thereby fixed on the sheet. A recurrent problem is that a sheet to be fed through the rollers is apt to jam in the rollers. Many attempts have been made to provide for easy servicing of the rollers, and to allow easy removal of a jammed sheet.

A fixing unit with two rollers may be constructed to be detachable axially from a frame of the apparatus, as disclosed in U.S. Patent No. 4 145 181, filed 1st September 1977 by E. G. Edward et al. A disadvantage of such a structure is that the operation for removing the fixing unit from the frame for servicing is not efficient; the two rollers must be removed together (without releasing a jammed sheet, if present, pressed between the rollers) making the removal of the sheet problematic. Further, a mechanism for pressing the rollers one towards the other must be installed in the fixing unit, resulting in increased hardware costs, as well as increased service costs.

Alternatively, the two rollers may be installed on respective separate frames, the frames being disengaged for servicing so as to release the pressure between the rollers, for example as disclosed in Japanese Unexamined Patent Publication Sho 61-176964 by Fukushima et al, or U.S. Patent Application No. 890 511 by Kawashima. A problem with these structures is that operations for removing the rollers, installed on respective frames, are troublesome, reducing efficiency of servicing of the rollers.

As a further alternative, one of the rollers may be pressed towards the other only when an upper chassis is engaged with a lower chassis, such as disclosed in Japanese Unexamined Patent Publication Sho 62-299982 by Yamashita et al. A problem with this structure is that the fixing unit is not detachable from the chassis, and accordingly servicing of the rollers cannot be efficiently carried out. The mechanism by which one roller is pressed towards the other when upper and lower chassis are engaged employs a pivotally mounted rigid arm carrying a spring loaded push rod.

US-A-4 428 660 discloses a fixing unit mounting the two rollers. The fixing unit is not disclosed to be detachably mounted. When an opening and closing frame part or lid is closed a link mechanism transfers force to a movable rigid lever which supports one of the rollers and presses it against the other.

DE-A-35 36 588 discloses a fixing arrangement with two rollers which are urged together. Means which form part of the locking mechanism for locking upper and lower frames together position the rollers one relative to the other.

According to the present invention there is provided an image forming apparatus, for forming an image on an image recording sheet, comprising:-
a lower frame and an upper frame, hinged one to the other;
a fixing unit provided with first and second rollers parallel one to the other for pinching the image recording sheet, having a toner image thereon, for fixing the toner image on the image recording sheet, under a first pressure laterally applied so as to urge the second roller towards the first roller;
fastening means for detachably mounting the fixing unit on one of the lower and upper frames;
a lever member which is bendable, to act in the manner of a leaf spring, and which is provided in the fixing unit, a first end of the lever member applying the first pressure in response to a second pressure laterally applied to a second end, opposite from said first end, of the lever member; and
a pushing member provided on that one of said frames on which the fixing unit is not installed, for applying the second pressure laterally to the second end of the lever member when the frames are closed to engage with each other.

An embodiment of the present invention can provide a compact fixing unit which can be easily mounted/demounted onto/from a frame on which the unit is to be installed.

An embodiment of the present invention can provide a compact and demountable fixing unit from which a jammed sheet of paper can be efficiently removed.

In an embodiment of the present invention a fixing unit demountably installed on a first frame is provided with a heat roller, a pressure roller and a lever, one end or portion of which is pushed by a second frame when the second frame is engaged with the first frame. Another end or portion of the lever is arranged to push the pressure roller, at both ends of its shaft, towards the heat roller so as to compress and heat a sheet having a toner image thereon. When the second frame is disengaged from the first frame pressure on the lever is released and the pressure roller is released from the heat roller so that the pressure on a jammed or trapped sheet is released, allowing easy removal of the sheet.

Reference is made, by way of example, to the accompanying drawings, in which:-
Fig. 1 schematically illustrates a structure of an electrophotographic recording apparatus, as an example of image forming apparatus, to which an embodiment of the present invention is applied,
Fig. 2(a) is a perspective view schematically illustrating the constitutions of an upper frame and a lower frame, shown separated from one another, with a fixing unit and a transcription unit demounted from the lower frame, of the apparatus of Fig. 1,
Fig. 2(b) is a schematic perspective view, from the same perspective as Fig. 2(a), of the fixing unit of the image forming apparatus of Fig. 1,
Fig. 3 is a schematic perspective view of the upper frame, with a developer and a photosensitive drum unit demounted, of the image forming apparatus of Fig. 1,
Fig. 4 is a schematic cross-sectional view, taken orthogonally to the axis of the fixing unit of the image forming apparatus of Fig. 1,
Fig. 5 is a schematic cross-sectional view, taken along the axis of the fixing unit of the image forming apparatus of Fig. 1,
Fig. 6 schematically illustrates the status of the fixing unit when the upper frame is engaged with the lower frame in the apparatus of Fig. 1,
Fig. 7 schematically illustrates the status of the fixing unit when the upper frame is disengaged from the lower frame in the apparatus of Fig. 1,
Fig. 8 schematically illustrates a cleaner case and an engaging buffer member used in a fixing unit in an embodiment of the present invention,
Figs. 9(a) and 9(b) are respective schematic cross-sectional views for assistance in explaining the relationships between a felt case, a buffer member, and rollers in a fixing unit of an embodiment of the present invention,
Fig. 10(a) schematically illustrates the relationship of a sheet guide to the fixing unit of an embodiment of the invention when the unit is being demounted from the lower frame,
Fig. 10(b) corresponds to Fig. 10(a), with the fixing unit mounted in the lower frame,
Fig. 11(a) schematically illustrates a fixing unit in accordance with another embodiment of the present invention, and
Fig. 11(b) is a schematic perspective view of a coil spring employed in Fig. 11(a).

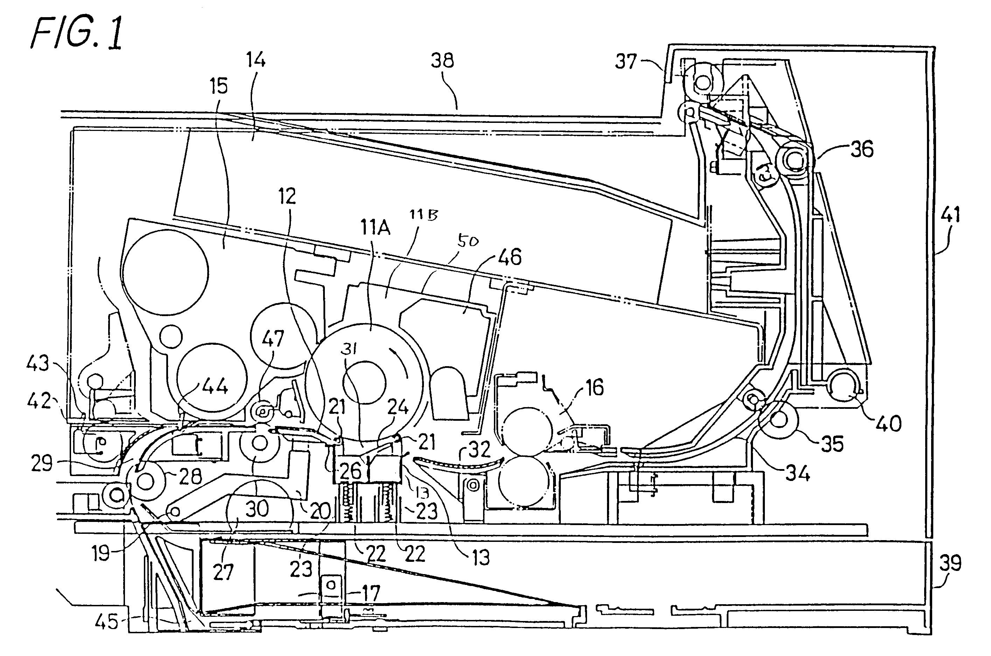

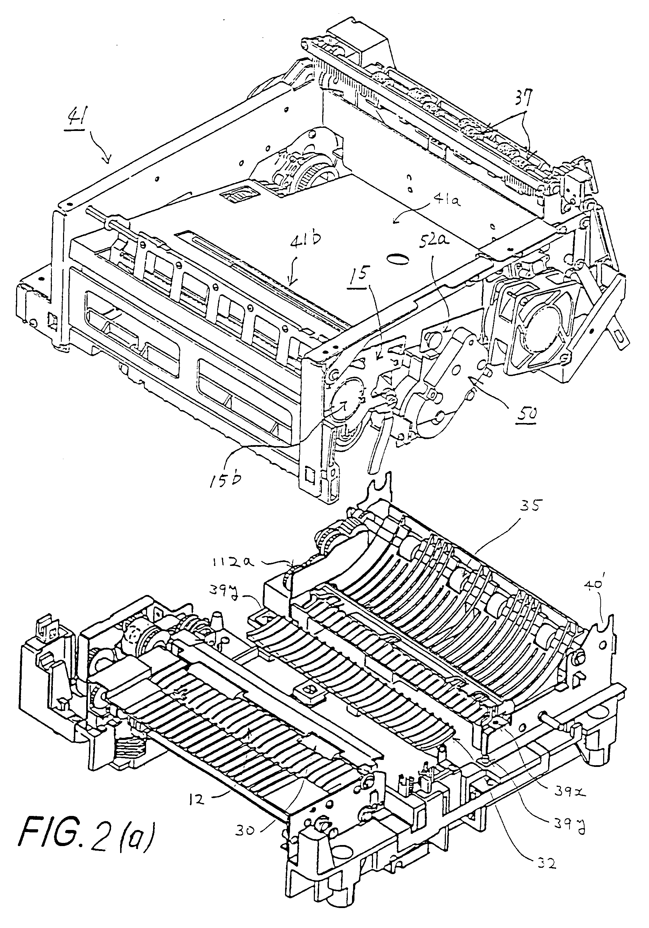

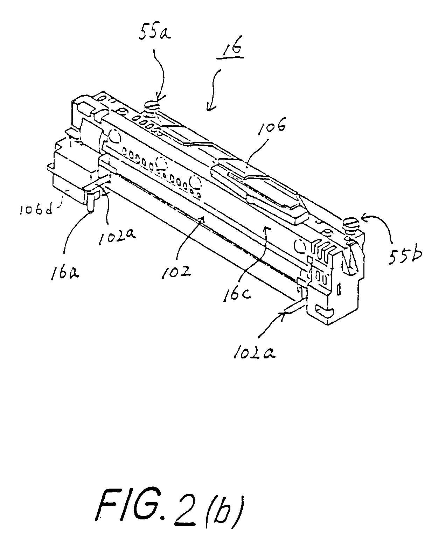

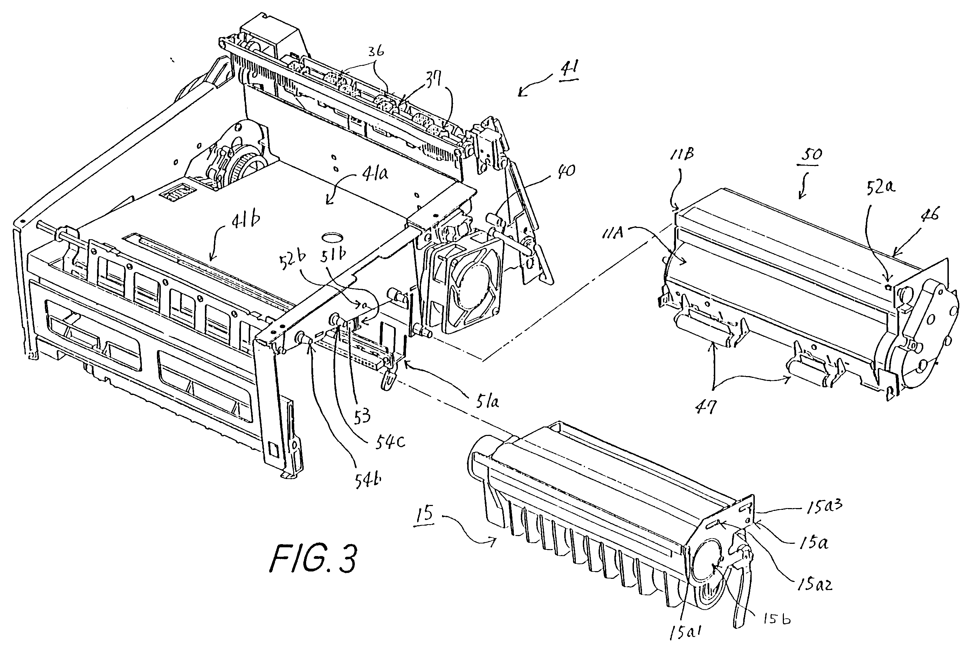

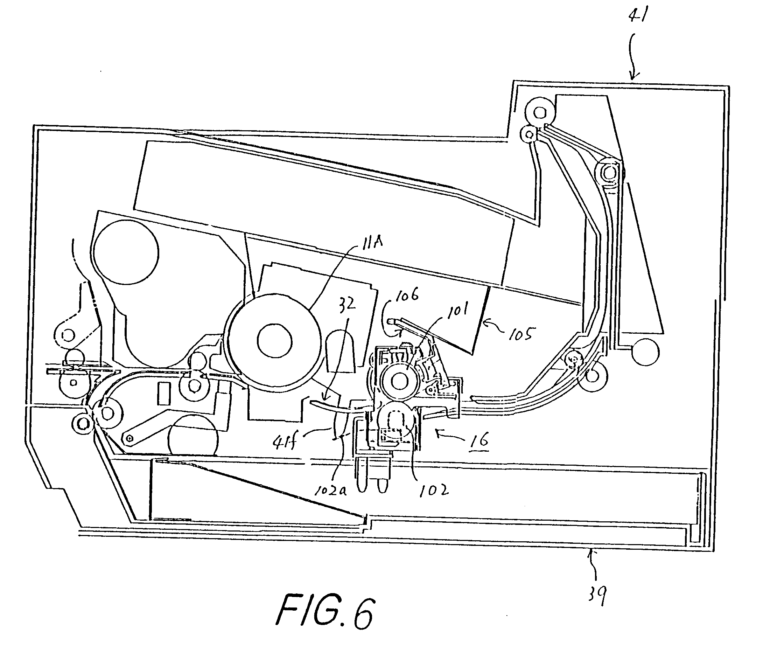

The general constitution of a laser printer, by way of example, in which an embodiment of the present invention is provided, is schematically illustrated in Fig. 1. Perspective views of some units making up the printer are shown in Figs. 2(a), 2(b) and 3. An optical unit 14 includes a semiconductor laser, polygonal mirrors, f - 0 lens (none of which are shown), and laser light is generated and modulated according to information to be recorded, and is scanned and focused on a photosensitive drum 11A so that a latent image is electrostatically formed thereon. The optical unit 14 is placed on a bed 41a (Fig. 2(a)). The laser light is projected through a slit 41b to the drum 11A. A developer 15 (Fig. 2(a), Fig. 3) supplies toner powder to the photosensitive drum 11A so that the latent image is developed thereon. A transfer unit 13 (Fig. 1) includes an electrocharger and an AC (alternating current) separator, and is urged by springs 22 and guided by guide members 23 towards the photosensitive drum 11A. Two pairs of rollers 21 serve to keep a predetermined clearance between the transfer unit and photosensitive drum 11A. The transfer unit 13 electrostatically transcribes the developed toner image on the drum 11A to a sheet fed thereto and attracted by an electrostatic force to the drum 11A. A fixing unit 16 (Fig. 1, Fig. 2(b)) includes a heat roller 101 and a pressure roller 102 (see e.g. Fig. 6) so that the sheet having the toner image thereon is pressed and heated to melt and fix the toner permanently on the sheet.

Cut sheets of paper on which an image is to be recorded are stacked in a sheet cassette 17, wherein the paper stack (not shown, i.e. the cassette is empty in the Figure) is urged upwards. The sheet cassette 17 is provided with a guide slit 45 for allowing a sheet from another sheet cassette (not shown in the Figure) to pass therethrough. The sheet cassette 17 is detachable from a lower frame 39 of the electrophotographic recording apparatus, towards the left-hand side of Fig. 1. A separator roller 27 rotates to push a sheet from the top of the sheet stack out to second feed rollers 28, which feed this sheet to third rollers 30 and 47 through a second slit 29. Alternatively, a sheet may be manually fed through a manual feed slit 42 to the third rollers 30 and 47. Sensors 43 and 44 detect a sheet coming in. The roller 30 is urged towards the roller 47 which is installed in a photosensitive drum unit 50 together with the photosensitive drum 11A, a precharger 11B and a cleaner 46 for removing residual toner on the drum 11A. A sheet pinched by the third rollers 30 and 47 is fed along a sheet guide 12 to an image transfer region 31 of the transcription unit 13 by the rotation of the roller 30 in synchronisation with rotation of the photosensitive drum 11A. The sheet guide 12 is supported by an arm 20, which is rotatable around an axle 19, and rests on an edge 26 of the transfer unit 13.

A second sheet guide 32 guides the sheet having transferred toner thereon to the fixing unit 16. The sheet coming out of the fixing unit 16 is transported by fourth, fifth and sixth feed roller pairs 35, 36 and 37 and guided through a third guide slit 34 to a stacker 38 for printed sheets.

The photosensitive drum unit 50 is installed on an upper frame 41 by being axially inserted along guide rails 51a and 51b (Fig. 3) and fastened with screw 52a through screw hole 52b, thus being detachable from the upper frame 41 for easy servicing.

The developing unit 15 is also axially installed on and detachable from the upper frame 41, guided along rails 53, etc., and positioned by engagement of guide pins 54b and 54c respectively with holes 15a2 and 15a3 provided on a side plate 15a (Fig. 3(a)). Thus, the developer unit 15 is demountable for easy resupply with carrier powder of a two-component developer powder. Resupply with toner is carried out by replacing a toner cartridge in a toner cartridge hole 15b, with the developer unit 15 still installed in the upper frame 41.

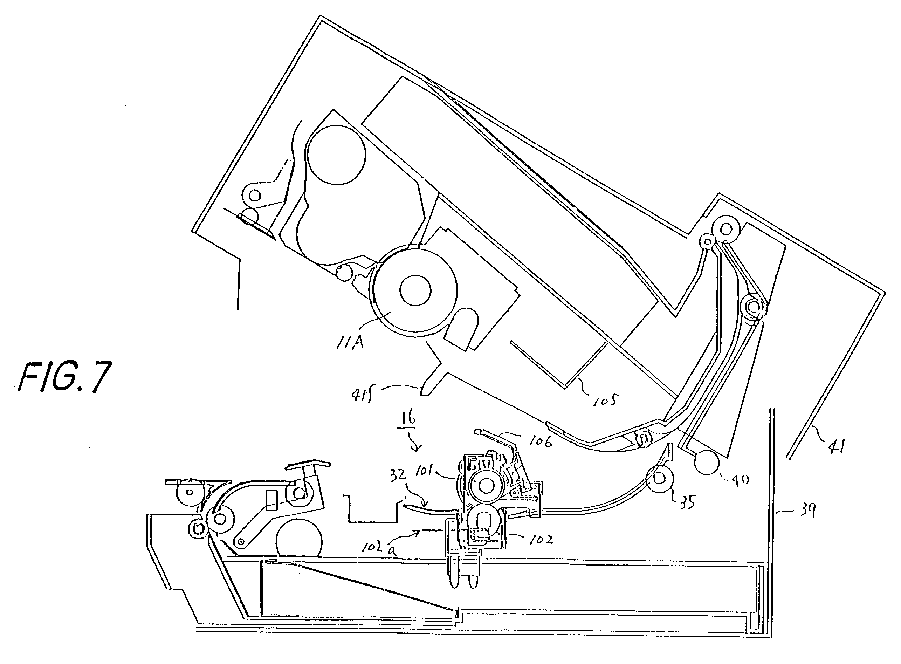

The upper frame 41 is set so as to face the lower frame 39, and can be disengaged therefrom, i.e. opened, by rotation of the upper frame 41 around an axis 40 functioning as a hinge, as shown in Fig. 7. The axis 40 is supported in receptacles 40′ of the lower frame 39 (Fig. 2(a)). The roller 47, the photosensitive drum 11A, one roller of the fourth roller pair 35, and the fifth and sixth pairs of rollers 36 and 37 are installed on the upper frame 41. The third roller 30, the second sheet guide 32, and the other roller of the fourth roller pair 35 are installed on the lower frame 39.

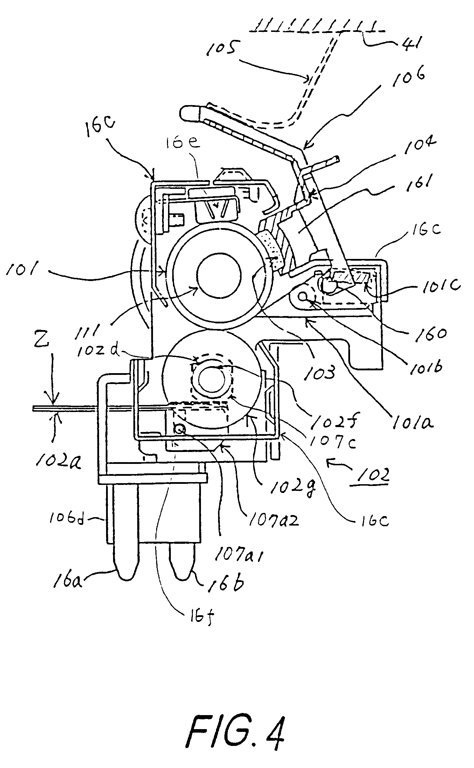

The fixing unit 16 is detachably installed on the lower frame 39. Two holes 16f (Fig. 2(b)) provided on the bottom of a case 16c of the fixing unit 16 are inserted with pins 39y (Fig. 2(a)) provided on the lower frame 39 in order to locate the fixing unit 16 on the lower frame 39, and two screws 55a and 55b (Fig. 2(b)) on the fixing unit 16 are screwed into tapped holes 39x (Fig. 2(a)) to fasten the fixing unit 16 to the lower frame 39. A plug 106d makes electrical connections with contacts (not shown in the Figure) provided on the lower frame 39, so that an electric supply to heat a heat lamp 111 in the fixing unit 16 is received and a signal from a thermosensor 16e (see Fig. 4) is output. The thermosensor 16e measures temperature of the heat roller, for the purpose of temperature control. Two guide plugs 16a and 16b (Fig. 4) provided on the bottom of the fixing unit 16 and receptacle holes therefor (not shown in the Figure) provided on the lower frame 39 guide the plug 106d to contacts on the lower frame 39.

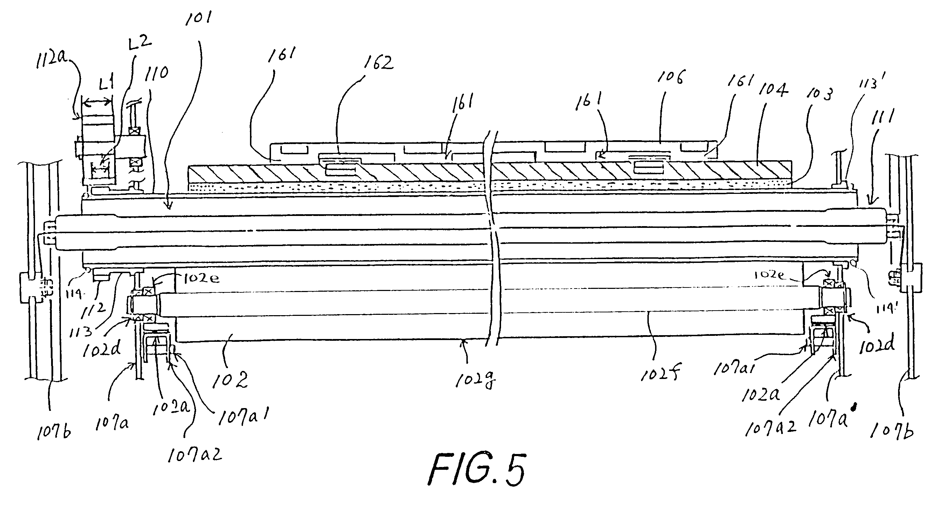

Referring to Figs. 4 and 5, structure of and function of the fixing unit 16 are hereinafter described in detail. The heat roller 101 includes a sleeve 110 of, for example, 30 mm diameter and 230 mm length, rotatably supported by guide plates 107a and 107a′ via bearings 113 and 113′ respectively; a gear 112 installed on an end of the sleeve; and a heat lamp 111 inserted through the sleeve 110 without touching the sleeve 110. Spring rings 114 and 114′ provided on the ends of the sleeve 110 prevent the sleeve 110 from being axially disengaged from the bearings 113 and 113′. The sleeve 110 rotates with the gear 112 driven by a gear 112a (Fig. 2(a) and Fig. 5), which is installed on the lower frame 39. The sleeve 111 is heated up to, typically, 190°C by the heat lamp 111, resulting in an axial expansion of 1 to 1.5 mm. Accordingly, the bearings 113 and 113′ allow the sleeve 110 to axially slide therein. Furthermore, width L1 of the gear 112a on the frame is made greater than width L2 of the gear 112 on the sleeve, so that complete engagement of the gears 112 and 112a is ensured in any temperature condition, to avoid damage to the gears.

A pressure roller 102 is composed of an axle 102f and a rubber tube 102g mounted thereover. A silicon (silicone) rubber is preferably chosen as the material of the rubber tube 102g because of its heat resistance and suitable elastic properties. Both ends of the axle 102f of the pressure roller 102 are supported in guide holes (107c in Fig. 4) provided in guide plates 107a and 107a′, via bearings 102d. A shorter or lesser width of each guide hole 107c provides a slidable fit with an outer diameter of a bearing 102d. A longer or greater width of each guide hole 107c extends in a direction towards the heat roller 101. Another pair of bearings 102e is further provided, at each end on the shaft 102f, inside the bearings 102d. Thus, the pressure roller 102 can be pushed towards the heat roller 101 by two lever members 102a via the two bearings 102e. The above-described structure for the pressure roller 102 allows it to be of smaller size as compared with a conventional structure, where bearings between a hollow cylinder, having a rubber tube thereover, and its axle are provided inside the hollow cylinder, and the shaft is pushed towards the heat roller. If an attempt is made to reduce the diameter of such a pressure roller the thickness of the rubber tube and the thickness of the axle must be made less, resulting in a weaker structure. Therefore, size reduction is limited.

Each of the lever members 102a is installed on a support member (107a2) which is rotatably mounted with respect to a guide plate (107a) via a pin (107a1). When an upper frame 41 is closed to engage with the lower frame 39 as shown in Fig. 6, each of two protrusions 41f provided on the upper frame 41 pushes downwards, i.e. in direction of an arrow Z shown in Fig. 4, for each lever member 102a to bent (bending each lever member), then the support member 107a2 rotates around the pin 107a1 so as to push the shaft 102f up laterally towards the heat roller 101, i.e. to deliver the pressure of the upper frame to the shaft 102f. Materials and sizes of the lever members 102a are chosen to provide a leaf spring action so that a proper pressure is generated between the heat roller 101 and the pressure roller 102.

Fig. 7 illustrates the situation when the upper frame is opened.

In order to separate a sheet from the heat roller (i.e. to prevent a sheet improperly wrapping around the heat roller 101) a plurality of separator nails 101a are provided which are rotatable around pins 101b on case 16c of the fixing unit 16 (Fig. 4). A sharp edge of a separator nail 101a is always pressed towards the surface of the heat roller 101 by a coil spring 101c.

Even though the surface of the sleeve 110 is coated with, typically, silicon (silicone) resin, undesirable sticking of toner to the surface of the heat roller (when toner is being fixed to a sheet) occurs. Therefore, a cleaner or cleaning felt 103, typically made of felt and installed in a channel of a felt case 104, extends longitudinally along the heat roller 101 and is arranged to press onto the heat roller 101.

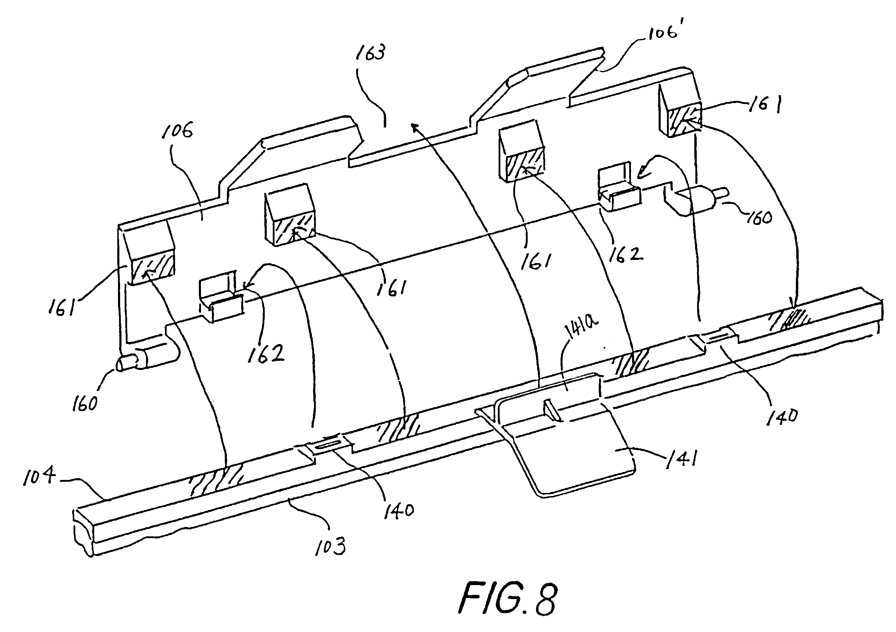

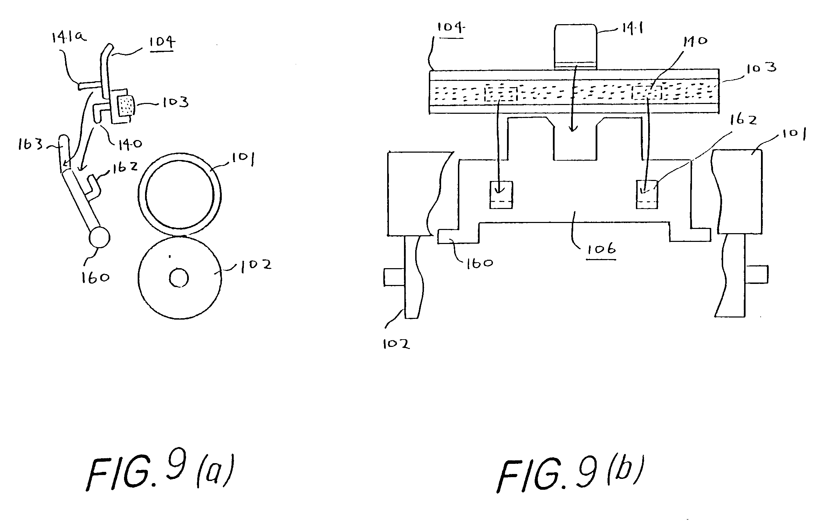

Referring to Figs. 8 and 9, structure of the felt case 104 and its related parts will be described. On the back of (on the side opposite to that with the channel having the felt 103 therein) the felt case 104 a handle 141 is provided, at the centre of the length of the felt case 104. Two pockets 140 are also provided. The pockets 140 are located typically one-quarter the length of the cleaner case from its two ends. Each of the pockets 140 is arranged to engage with an associated hook 162 provided on a buffer member 106, and at the same time, the handle 141 is arranged to fit into a gap 163 between pressure receiving plates, i.e. two extending portions 106′, then a projection 141a orthogonal to the handle 141 rests over the central edge of the gap 163, so that merely by gripping the handle 141 the felt case 104 is easily mounted or demounted and its axial location is exactly determined. The buffer member 106 is made of plastic material, and is further provided with two pins 160 at the bottom of its respective longitudinal ends, to form a shaft for the buffer member to rotate; four embossments 161 to push the back of the felt case 104; and two pressure receiving plates 106′ at the top, opposite to the pins 160.

On the upper frame 41, two leaf springs 105 (Fig. 4) are provided so as to respectively push down the pressure receiving plates 106′ of the buffer member 106 to rotate around the pins 160 when the upper frame 39 is closed to engage the lower frame 41 as shown in Fig. 6. Then, the four embossments 161 essentially uniformly distributed along the length of the buffer member 106 push the felt case 104. Accordingly, the cleaning felt 103 is pressed onto the heat roller 101 uniformly along the longitudinal direction.

The fixing unit is intended to be replaceable and disposable by a user operating the apparatus. Therefore, as described above, the constitution of the fixing unit is made as simple as possible, with no costly mechanisms for compressing sheets.

When a sheet is jammed between the heat roller 101 and the pressure roller 102, the upper frame 39 is opened, to be disengaged from the lower frame 41, as shown in Fig. 7. The pressure on a lever member 102a via a protrusion 41f is thereby released and consequently the pressure on the pressure roller 102 exerted via lever member 102a is released. Releasing of the pressure on the pressure roller 102 causes the pressure roller 102 to fall downwards under its own weight and, accordingly, the pressure holding the jammed sheet is released. Then, the jammed sheet is easily removed by hand.

The procedure for replacing the cleaning felt 103 is also easy, as follows: after the upper frame 41 is opened from the lower frame 39 by rotating around the shaft 40, the pressure receiving plates 106′ are freed from the leaf springs 105, the buffer member 106 is turned around the pins 160 so as to separate the cleaning felt 103 from the heat roller 101 and then the felt case 104 is removed from the buffer member 106 by simply gripping and pulling up the handle 141 by a single hand. Next, the cleaning felt 103 set into the channel of the felt case 104 is pulled out therefrom, using fingers, ready for replacement. This simple procedure of replacing the cleaning felt is advantageous in terms of efficient servicing, because the operating life of the cleaning felt is shorter than those of other parts in the fixing unit 16.

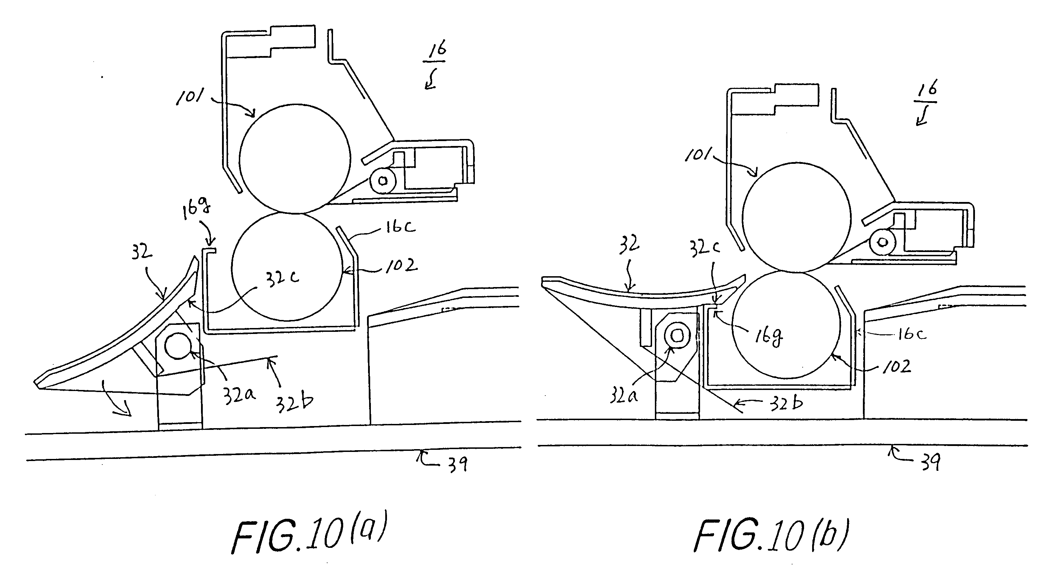

When servicing other parts of the fixing unit 16, the fixing unit 16 can be easily demounted from the lower frame 39 by simply releasing the two screws 55a and 55b, and then pulling up the fixing unit 16 by hand until the guide pins 39y, 16a and 16b are disengaged respectively from the holes 16f on the case 16c and the receptacle holes on the lower frame 39, as illustrated in Fig. 10(a), where, however, the guide plugs 16a and 16b are not shown. During the above-mentioned pulling up operation, the fixing unit 16 releases pressure exerted on a leaf spring 32b connected to the second sheet guide 32. Then, the second sheet guide 32, being rotatable around an axis 32a which is located between the centre of gravity of the second sheet guide 32 and the fixing unit 16, falls down under its own weight so as to provide a free space for the fixing unit 16 to go up.

When the fixing unit 16 is installed onto the lower frame 39, a bottom edge of the case 16c pushes down the leaf spring 32b so as to rotate clockwise and push up the second sheet guide 32 around the axis 32a until a reference edge 32c of the guide sits on a stage 16g of the case 16c, as shown in Fig. 10(b). Due to the spring action of the leaf spring 32b the reference edge 32c is properly pressed to the stage 16g allowing precise positioning of the second sheet guide 32 with respect to the heat roller 101, without precisely specifying the shape and position of the fixing unit case 16c. Accordingly, the above-mentioned structure of the second sheet guide 32 requiring no setting adjustment allows an efficient mounting/demounting of the fixing unit 16 to/from the lower frame 39.

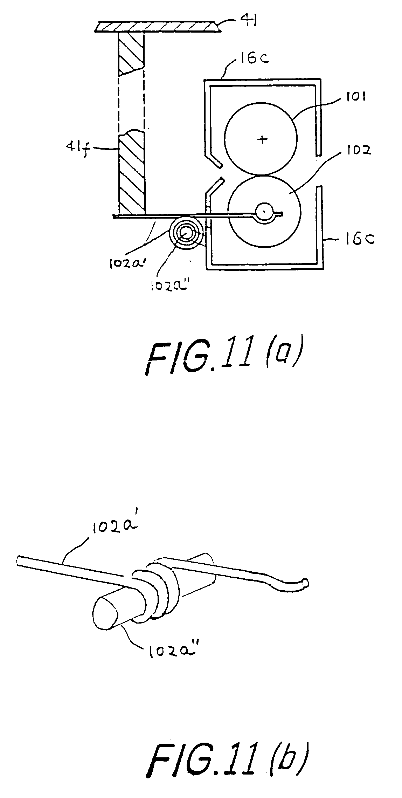

Though in the above-described embodiment a leaf spring is employed for the lever member 102a, a coil spring 102a′ as shown in Fig. 11(b) may be alternatively employed. The coil spring 102a′ is rotatably mounted on an axle pin 102a˝ which is installed on the case 16c of the fixing unit as shown in Fig. 11(a). One end of the coil spring 102a′ is pushed by the protrusion 41f from the upper frame 41 and then another end of the coil spring 102a′ pushes, via the bearing 102e (not shown in Fig. 11(a)), the pressure roller 102 upwards. A coil spring is suitable to deliver an appropriate pressure to the pressure roller.

Though in the above-described embodiment the heat roller 101 is uppermost and the pressure roller lowermost, it will be clear that embodiments of the present invention can be applied to cases in which the relative locations of the heat roller and the pressure roller are interchanged, and furthermore to cases in which both the rollers are pressure rollers, i.e. to fixing units including no heat rollers.

Though in the above-described embodiment of the present invention, the pressure roller falls down under its own weight when the upper frame is open, it is possible to provide a spring to separate one of the rollers from the other roller. With this spring, it is possible that one of the rollers is moved upwards from the other roller when the pressure from the upper frame is released.

Though in the above-described embodiment the fixing unit is in the lower frame, embodiments of the invention may be provided in which it is in the upper frame.

Summarising the advantages of a fixing unit according to an embodiment of the present invention, a less expensive structure, i.e. a compact and simple structure, such that the sheet compressing mechanism of the fixing unit is devised for the roller to receive merely a lateral pressure, and easy removal of a jammed sheet from the fixing unit, allows a less experienced person, such as a user of the apparatus, to easily and efficiently mount/demount the fixing unit onto/from the frame, resulting in an economical maintenance of the apparatus.

In an image forming apparatus according to an embodiment of the present invention, a fixing unit demountably installed on a first frame is provided with a heat roller, a pressure roller, and a lever which is pushed by a second frame when the second frame is engaged with the first frame. The arrangement is such that the other side of the lever then pushes the pressure roller at both ends of its shaft transversely towards the heat roller for compression and heating of a sheet having a toner image thereon. When the second frame is disengaged from the first frame the pressure onto the lever is released and, consequently, the pressure roller moves away from the heat roller so that the pressure on the sheet is released for easy removal of the sheet therefrom.

## Claims

1. An image forming apparatus, for forming an image on an image recording sheet, comprising:-
a lower frame (39) and an upper frame (41), hinged (40) one to the other;
a fixing unit (16) provided with first (101) and second (102) rollers parallel one to the other for pinching the image recording sheet, having a toner image thereon, for fixing the toner image on the image recording sheet, under a first pressure laterally applied so as to urge the second roller (102) towards the first roller (101);
fastening means (55a, 55b) for detachably mounting the fixing unit on one of the lower and upper frames;
a lever member (102a; 102a') which is bendable, to act in the manner of a leaf spring, and which is provided in the fixing unit (16), a first end of the lever member applying the first pressure in response to a second pressure laterally applied to a second end, opposite from said first end, of the lever member; and
a pushing member (41f) provided on that one of said frames (41) on which the fixing unit (16) is not installed, for applying the second pressure laterally to the second end of the lever member (102a; 102a') when the frames are closed to engage with each other.

2. Apparatus according to claim 1, wherein the first roller (101) is a heat roller, for heating the image forming sheet having said toner image thereon, and the second roller (102) is a pressure roller, to which the first pressure is applied.

3. Apparatus according to claim 2, wherein said pressure roller (102) comprises an elastic material (102g) mounted around a rigid axle (102f).

4. Apparatus according to claim 1, 2 or 3, wherein both ends of an axle (102f) of the second roller (102) are slidable laterally towards and away from the first roller (101), the second roller (102) being provided with bearings (102e) near respective ends of the axle (102f), the first pressure being applied to each of the bearings.

5. Apparatus according to claim 1, 2, 3 or 4, wherein the lever member (102a) is constituted as a leaf spring.

6. Apparatus according to claim 1, 2, 3 or 4, wherein the lever member (102a′) is constituted as a coil spring.

7. Apparatus according to claim 2 or 3, or claim 4, 5 or 6 when read as appended to claim 2 or 3, wherein the fixing unit (16) further comprises roller cleaning means comprising:-
a piece of cleaning felt (103) for wiping toner remnants off the heat roller (101), after toner has been fixed to the image recording sheet, the piece of cleaning felt (103) extending longitudinally along and contacting a surface of the heat roller (101);
a felt case (104) having a channel therein for containing the piece of cleaning felt (103), the felt case (104) having at least two pocket means (140) on a reverse side thereof, opposite to a side at which the channel is formed, each pocket means (140) having an opening on a side thereof heading for a direction of rotation of the heat roller (101) with respect to the piece of cleaning felt (103), and the felt case (104) having a handle member (141) on an essentially central portion of the reverse side thereof; and
a buffer member (106) supported on a case of the fixing unit (16) so as to be rotatable laterally towards the heat roller (101) around an axis (160) provided on a first side of the buffer member, the buffer member (106) having hook means (162) for engaging with and supporting said pocket means (140), and having a plurality of embossments (161) for bearing on the reverse side of the felt case (104), and the buffer member (106) being pushed at a reverse face thereof, opposite to a face having the hook means (162), by a second pushing member (105) provided on one of frames (41) on which the fixing unit (16) is not installed, when the frames are closed to be engaged with each other,
whereby the piece of felt (103) is pressed onto the heat roller (101) uniformly along the length thereof.

8. Apparatus according to claim 7, wherein a second side, opposite to said first side, of the buffer member (106) has two extended portions (106′), each of which is pressed by the second pushing member (105) at its reverse face.

9. Apparatus according to claim 8, wherein the handle member (141) on the felt case (104) engages with a gap formed between said two extended portions (106′) of the buffer member (106) when said pocket means (140) are engaged with said hook means (162), whereby longitudinal location of the felt case (104) is determined.

10. Apparatus according to any preceding claim, further comprising a sheet guide (32) for supporting and guiding the image recording sheet, having a toner image thereon, to pass between the first (101) and second (102) rollers, the sheet guide (32) being supported so as to be rotatable about a sheet guide axis (32a) which is parallel to the rollers (101, 102), the sheet guide axis (32a) being located between a centre of gravity of the sheet guide (32) and the fixing unit (16) and lower than said centre of gravity, such that before the fixing unit (16) is installed in the lower frame (39), the sheet guide (32) falls away from a space for accommodating the fixing unit (16) in the apparatus, consequently providing a path for the fixing unit (16) to be mounted in the lower frame (39), whilst when the fixing unit (16) is inserted into the said space a bottom of the fixing unit pushes a spring member (32b) extending from a part, lower than said axis (32a), of the sheet guide (32) into the said space so as to rotate the sheet guide (32) towards the fixing unit (16), and when the fixing unit (16) sits on the lower frame (39) the sheet guide (32) rests on a reference edge (16g) of the case (16c) of the fixing unit (16) due to a spring action of the spring member (32b), whereby the sheet guide (32) is precisely positioned with respect to the fixing unit (16).

11. A fixing unit of apparatus as claimed in any preceding claim.

## Patentansprüche

1. Eine Bilderzeugungsvorrichtung, zum Erzeugen eines Bildes auf einem Bildaufzeichungsblatt, mit:-
einem unteren Rahmen (39) und einem oberen Rahmen (41), die aneinander gelenkig befestigt sind (40);
einer Fixiereinheit (16), die mit ersten (101) und zweiten (102) Walzen, die parallel zueinander sind, zum Einklemmen des Bildaufzeichnungsblattes, das ein Tonerbild darauf hat, versehen ist, zum Fixieren des Tonerbildes auf dem Bildaufzeichnungsblatt, unter einem ersten Druck, der seitlich wirkt, um die zweite Walze (102) zu der ersten Walze (101) zu drängen;
Befestigungsmitteln (55a, 55b) zum lösbaren Montieren der Fixiereinheit auf einem der unteren und oberen Rahmen;
einem Hebelglied (102a; 102a'), das biegbar ist, um auf die Art einer Blattfeder zu wirken, und das in der Fixiereinheit (16) vorgesehen ist, wobei ein erstes Ende des Hebelgliedes den ersten Druck ansprechend auf einen zweiten Druck ausübt, der seitlich auf ein zweites Ende, gegenüber dem ersten Ende, des Hebelgliedes wirkt; und
einem Schiebeglied (41f), das auf jenem der genannten Rahmen (41) vorgesehen ist, auf dem die Fixiereinheit (16) nicht installiert ist, zum Ausüben des zweiten Druckes seitlich auf das zweite Ende des Hebelgliedes (102a; 102a'), wenn die Rahmen geschlossen sind, um miteinander im Eingriff zu stehen.

2. Die Vorrichtung nach Anspruch 1, bei der die erste Walze (101) eine Wärmewalze zum Erwärmen des Bildaufzeichnungsblattes ist, welches das genannte Tonerbild darauf hat, und die zweite Walze (102) eine Druckwalze ist, auf die der erste Druck ausgeübt wird.

3. Die Vorrichtung nach Anspruch 2, bei der die genannte Druckwalze (102) ein elastisches Material (102g) umfaßt, das um eine starre Achse (102f) montiert ist.

4. Die Vorrichtung nach Anspruch 1, 2 oder 3, bei der beide Enden einer Achse (102f) der zweiten Walze (102) seitlich zu der ersten Walze (101) und von ihr weg verschiebbar sind, wobei die zweite Walze (102) in der Nähe von jeweiligen Enden der Achse (102f) mit Lagern (102e) versehen ist und der erste Druck auf jedes der Lager ausgeübt wird.

5. Die Vorrichtung nach Anspruch 1, 2, 3 oder 4, bei der das Hebelglied (102a) als Blattfeder gebildet ist.

6. Die Vorrichtung nach Anspruch 1, 2, 3 oder 4, bei der das Hebelglied (102a') als Schraubenfeder gebildet ist.

7. Die Vorrichtung nach Anspruch 2 oder 3, oder nach Anspruch 4, 5 oder 6 zusammen mit Anspruch 2 oder 3, bei der die Fixiereinheit (16) ferner ein Walzenreinigungsmittel umfaßt mit:-
einem Stück Reinigungsfilz (103) zum Wegwischen von Tonerrückständen von der Wärmewalze (101), nachdem Toner auf dem Bildaufzeichnungsblatt fixiert worden ist, welches Stück Reinigungsfilz (103) sich longitudinal längs und in Kontakt mit einer Oberfläche der Wärmewalze (101) erstreckt;
einem Filzgehäuse (104) mit einem Kanal darin zum Aufnehmen des Stückes Reinigungsfilz (103), wobei das Filzgehäuse (104) wenigstens zwei Taschenmittel (140) auf einer Rückseite davon hat, die einer Seite, auf der der Kanal gebildet ist, gegenüberliegt, jedes Taschenmittel (140) eine Öffnung auf einer Seite davon hat, die in eine Rotationsrichtung der Wärmewalze (101) bezüglich des Stückes Reinigungsfilz (103) zeigt, und das Filzgehäuse (104) ein Griffglied (141) auf einem im wesentlichen mittleren Teil seiner Rückseite hat; und
einem Pufferglied (106), das auf einem Gehäuse der Fixiereinheit (16) gestützt ist, um seitlich zu der Wärmewalze (101) um eine Achse (160), die auf einer ersten Seite des Puffergliedes vorgesehen ist, rotierbar zu sein, wobei das Pufferglied (106) Hakenmittel (162) zum Eingreifen in die und Stützen der genannten Taschenmittel (140) hat und eine Vielzahl von Erhebungen (161) zum Lagern auf der Rückseite des Filzgehäuses (104) hat, und das Pufferglied (106) an einer Rückseite davon, die einer Seite mit den Hakenmitteln (162) gegenüberliegt, durch ein zweites Schiebeglied (105) geschoben wird, das auf einem der Rahmen (41) vorgesehen ist, auf dem die Fixiereinheit (16) nicht installiert ist, wenn die Rahmen geschlossen sind, um miteinander im Eingriff zu stehen,
wodurch das Stück Filz (103) gleichmäßig auf die Wärmewalze (101) längs deren Länge gedrückt wird.

8. Die Vorrichtung nach Anspruch 7, bei der eine zweite Seite des Puffergliedes (106), die der genannten ersten Seite gegenüberliegt, zwei verlängerte Teile (106') hat, wovon jedes auf seiner Rückseite durch das zweite Schiebeglied (105) gedrückt wird.

9. Die Vorrichtung nach Anspruch 8, bei der das Griffglied (141) auf dem Filzgehäuse (104) mit einer Lücke, die zwischen den genannten zwei verlängerten Teilen (106') des Puffergliedes (106) gebildet ist, im Eingriff steht, wenn die genannten Taschenmittel (140) mit den genannten Hakenmitteln (162) im Eingriff stehen, wodurch die longitudinale Anordnung des Filzgehäuses (104) bestimmt ist.

10. Die Vorrichtung nach irgendeinem vorhergehenden Anspruch, die ferner eine Blattführung (32) zum Stützen und Führen des Bildaufzeichnungsblattes umfaßt, das ein Tonerbild darauf hat, um zwischen den ersten (101) und zweiten (102) Walzen zu passieren, wobei die Blattführung (32) gestützt ist, um um eine Blattführungsachse (32a) rotierbar zu sein, die parallel zu den Walzen (101, 102) ist, die Blattführungsachse (32a) zwischen einem Schwerkraftzentrum der Blattführung (32) und der Fixiereinheit (16) und niedriger als das genannte Schwerkraftzentrum derart angeordnet ist, daß die Blattführung (32) vor dem Installieren der Fixiereinheit (16) in den unteren Rahmen (39) aus einem Raum zum Aufnehmen der Fixiereinheit (16) in der Vorrichtung herausfällt, demzufolge ein Weg für die Fixiereinheit (16) vorgesehen ist, um in den unteren Rahmen (39) montiert zu werden, wobei bei dem Einsetzen der Fixiereinheit (16) in den genannten Raum ein Boden der Fixiereinheit ein Federglied (32b) schiebt, das sich aus einem Teil der Blattführung (32), das niedriger als die genannte Achse (32a) ist, in den genannten Raum erstreckt, um die Blattführung (32) zu der Fixiereinheit (16) zu rotieren, und, wenn die Fixiereinheit (16) auf dem unteren Rahmen (39) aufliegt, die Blattführung (32) auf einer Bezugskante (16g) des Gehäuses (16c) der Fixiereinheit (16) auf Grund einer Federwirkung des Federgliedes (32b) verbleibt, wodurch die Blattführung (32) bezüglich der Fixiereinheit (16) präzise positioniert ist.

11. Eine Fixiereinheit der Vorrichtung nach irgendeinem vorhergehenden Anspruch.

## Revendications

1. Appareil de formation d'image, destiné à former une image sur une feuille d'enregistrement d'image, comprenant :
un châssis inférieur (39) et un châssis supérieur (41) articulés (40) l'un sur l'autre,
une unité (16) de fixage ayant un premier rouleau (101) et un second rouleau (102) qui sont parallèles l'un à l'autre et sont destinés à pincer la feuille d'enregistrement d'image qui porte une image de développateur afin que l'image de développateur portée par la feuille soit fixée, avec application d'une première pression appliquée latéralement afin que le second rouleau (102) soit repoussé vers le premier rouleau (101),
un dispositif (55a, 55b) de fixation destiné au montage amovible de l'unité de fixage sur l'un des châssis inférieur et supérieur,
un organe à levier (102a ; 102a') qui peut fléchir afin qu'il agisse comme un ressort à lame et qui est placé dans l'unité de fixage (16), une première extrémité de l'organe à levier exerçant une première pression en présence d'une seconde pression appliquée latéralement à une seconde extrémité de l'organe à levier, opposée à la première extrémité, et
un organe de poussée (41f) placé sur l'un des châssis (41) sur lequel l'unité de fixage (16) n'est pas installée et destiné à appliquer la seconde pression latéralement à la seconde extrémité de l'organe à levier (102a, 102a') lorsque les châssis sont fermés afin qu'ils viennent coopérer l'un avec l'autre.

2. Appareil selon la revendication 1, dans lequel le premier rouleau (101) est un rouleau chauffant déstiné à chauffer la feuille de formation d'image qui porte l'image de développateur, et le second rouleau (102) est un rouleau de pression auquel est appliquée la première pression.

3. Appareil selon la revendication 2, dans lequel le rouleau de pression (102) est formé d'une matière élastique (102g) montée autour d'un axe rigide (102f).

4. Appareil selon la revendication 1, 2 ou 3, dans lequel les deux extrémités d'un axe (102f) du second rouleau (102) peuvent coulisser latéralement en translation par rapport au premier rouleau (101), le second rouleau (102) ayant des paliers (102e) proches des extrémités respectives de l'axe (102f), la première pression étant appliquée à chacun des paliers.

5. Appareil selon la revendication 1, 2, 3 ou 4, dans lequel l'organe à levier (102a) est constitué d'un ressort à lame.

6. Appareil selon la revendication 1, 2, 3 ou 4, dans lequel l'organe à levier (102a') est constitué d'un ressort hélicoïdal.

7. Appareil selon la revendication 2 ou 3 ou la revendication 4, 5 ou 6 considérée comme dépendant de la revendication 2 ou 3, dans lequel l'unité de fixage (16) comporte en outre un dispositif de nettoyage de rouleau qui comprend :
un morceau de feutre de nettoyage (103) destiné à essuyer les résidus de développateur du rouleau chauffant (101), après que le développateur a été fixé sur la feuille d'enregistrement d'image, le morceau de feutre de nettoyage (103) étant disposé longitudinalement le long du rouleau chauffant (101) et au contact d'une surface de celui-ci,
un carter (104) de feutre ayant un canal destiné à contenir le morceau de feutre de nettoyage (103), le carter (104) de feutre ayant au moins deux poches (140) formées à sa face arrière, du côté opposé à celui dans lequel est formé le canal, chaque poche (140) ayant une ouverture formée d'un côté tourné dans le sens de rotation du rouleau chauffant (101) par rapport au morceau de feutre de nettoyage (103), et le carter de feutre (104) ayant une poignée (141) placée sur sa partie pratiquement centrale à sa face arrière, et
un organe tampon (106) supporté par un carter de l'unité de fixage (16) afin qu'il puisse tourner latéralement vers le rouleau chauffant (101) autour d'un axe (160) placé d'un premier côté de l'organe tampon, l'organe tampon (106) ayant des crochets (162) destinés à coopérer avec les poches (140) et à les supporter et ayant plusieurs saillies (161) destinées à être en appui sur la face arrière du carter de feutre (104), et l'organe tampon (106) étant repoussé à sa face arrière opposée à celle qui porte les crochets (162), par un second organe de poussée (105) disposé sur l'un des châssis (41) sur lequel n'est pas montée l'unité de fixage (16), lorsque les châssis sont fermés afin qu'ils coopèrent l'un avec l'autre,
si bien que le morceau de feutre (103) est repoussé contre le rouleau chauffant (101) de manière uniforme sur sa longueur.

8. Appareil selon la revendication 7, dans lequel un second côté, opposé au premier côté, de l'organe tampon (106) a deux parties de prolongement (106') repoussées chacune par le second organe de poussée (105) à sa face arrière.

9. Appareil selon la revendication 8, dans lequel la poignée (141) du carter de feutre (104) est au contact d'un espace formé entre les deux parties de prolongement (106') de l'organe tampon (106) lorsque les poches (140) coopèrent avec les crochets (162), si bien que l'emplacement longitudinal du carter de feutre (104) est déterminé.

10. Appareil selon l'une quelconque des revendications précédentes, comprenant en outre un guide (32) de feuille destiné à supporter et guider la feuille d'enregistrement d'image portant une image de développateur afin qu'elle passe entre le premier rouleau (101) et le second rouleau (102), le guide (32) de feuille étant supporté afin qu'il puisse tourner autour d'un axe (32a) de guide de feuille qui est parallèle aux rouleaux (101, 102), l'axe (32a) de guide de feuille étant placé entre le centre de gravité du guide de feuille (32) et l'unité de fixage (16) et se trouvant au-dessous du centre de gravité, si bien que, avant montage de l'unité de fixage (16) dans le châssis inférieur (39), le guide de feuille (32) tombe en s'écartant d'un espace de logement de l'unité de fixage (16) formée dans l'appareil, et forme ainsi un trajet pour le montage de l'unité de fixage (16) dans le châssis inférieur (39), alors que, lorsque l'unité de fixage (16) est introduite dans cet espace, une partie inférieure de l'unité de fixage repousse un organe à ressort (32b) dépassant d'une partie du guide de feuille (32), inférieure audit axe (32a), dans ledit espace afin que le guide de feuille (32) tourne vers l'unité de fixage (16), et lorsque l'unité de fixage (16) est en appui sur le châssis inférieur (39), le guide de feuille (32) est en appui sur un bord de référence (16g) du carter (16c) de l'unité de fixage (16) du fait d'une action élastique de l'organe à ressort (32b), si bien que le guide de feuille (32) est positionné avec précision par rapport à l'unité de fixage (16).

11. Unité de fixage de l'appareil selon l'une quelconque des revendications précédentes.
